# EUROPEAN PATENT APPLICATION

(11) **EP 4 624 052 A1**
(43) Date of publication of application: **01.10.2025**
(21) Application number: 25164921.6
(22) Date of filing: 20.03.2025
(51) Int. Cl.: B05B 7/00, G01N 17/00

(54) **FOG ENVIRONMENT FORMING APPARATUS AND FOG ENVIRONMENT FORMING METHOD**

(30) Priority: 27.03.2024 JP 2024051045
(71) Applicant: Espec Corp., Kita-ku Osaka-shi Osaka 530-8550 (JP)
(72) Inventor: ENOKI, Hiroyuki, Osaka, 530-8550 (JP); SETO, Haruki, Osaka, 530-8550 (JP)
(74) Representative: SSM Sandmair

(57) **Abstract**

A fog environment forming apparatus includes a spraying portion that discharges atomized water for forming a fog environment, and a blower that suctions air containing the atomized water discharged from the spraying portion and causes the air containing the suctioned water to flow out toward a subject while mixing the air. The blower is configured to cause the mixed air to flow out toward the subject within a height range of the subject.

## Description

### FIELD OF INVENTION

The present invention relates to a fog environment forming apparatus and a fog environment forming method.

### BACKGROUND ART

Conventionally, as disclosed in Japanese Unexamined Patent Application Publication No. H11-51823, a fog environment forming apparatus for forming a fog environment having a predetermined density in a room is known. The fog environment forming apparatus disclosed in Japanese Unexamined Patent Application Publication No. H11-51823 includes multiple nozzles that sprays atomized water in a test chamber, a boiler that generates steam, and a blower that joins steam obtained by the boiler to outside air and introducing the outside air humidified by the steam into the test chamber. A visibility meter is disposed in the test chamber so that visibility due to fog in the test chamber can be measured.

The fog environment forming apparatus disclosed in Japanese Unexamined Patent Application Publication No. H11-51823 is provided with multiple nozzles. However, since the fog is merely generated by the multiple nozzles in the test chamber, there is a possibility that unevenness in the density of the fog occurs around a test piece (around a subject exposed to a predetermined fog environment or in a subject area).

### SUMMARY OF THE INVENTION

An object of the present invention is to suppress occurrence of unevenness in density of a fog around a subject exposed to a predetermined fog environment or in a subject area.

A fog environment forming apparatus according to one aspect of the present invention includes a spraying portion configured to discharge atomized water for forming a fog environment, and a blower disposed to suction air containing the atomized water discharged from the spraying portion and cause the air containing the water suctioned to flow out toward a subject or a subject area while mixing the air.

A fog environment forming method according to another aspect of the present invention includes discharging, by a spraying portion, atomized water for forming a fog environment, suctioning, by a blower, air containing the atomized water discharged from the spraying portion, and causing, by the blower, the air containing the water suctioned to flow out toward a subject or a subject area while mixing the air.

### BRIEF DESCRIPTION OF THE DRAWINGS

Fig. 1 is a diagram schematically showing a configuration of a fog environment forming apparatus according to a first embodiment;
Fig. 2 is a diagram for describing a configuration of a visibility measurement sensor;
Fig. 3 is a diagram schematically showing a modification of the fog environment forming apparatus in which a sprayer is disposed in a blower chamber;
Fig. 4 is a diagram schematically showing a modification of the fog environment forming apparatus applied to a structure provided with no partition wall and having an internal space configured as one space; and
Fig. 5 is a diagram schematically showing a configuration of a fog environment forming apparatus according to a second embodiment.

### DETAILED DESCRIPTION

Hereinafter, embodiments of the present invention will be described in detail with reference to the drawings.

### (First embodiment)

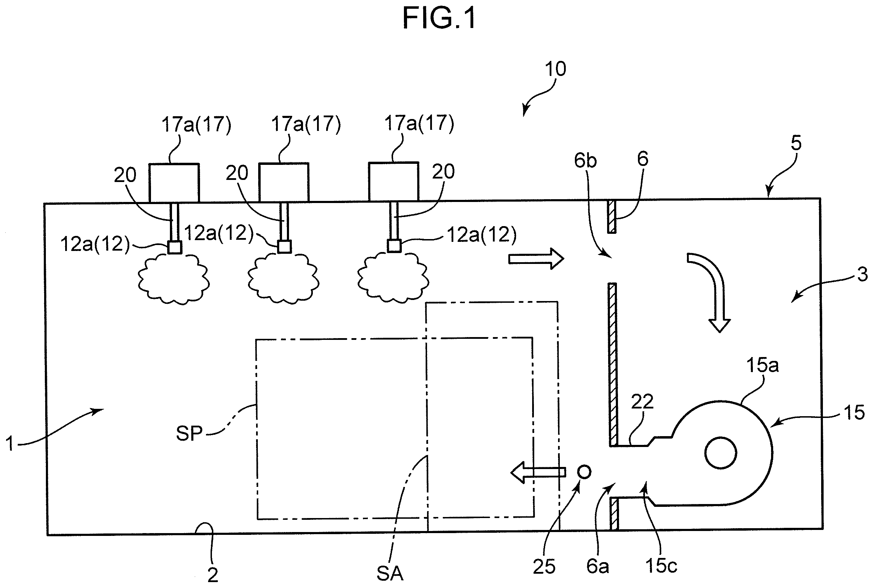

As shown in Fig. 1, a fog environment forming apparatus 10 according to the present embodiment is an apparatus for forming a fog environment with desired visibility at least in a subject area SA in an environment chamber 1. The fog environment forming apparatus 10 may be a testing device for evaluating the characteristics of a subject SP in a fog environment by setting a periphery of the subject SP to be tested as the fog environment. Here, fog refers to a state in which atomized water (fine particles of water) is floating in the air, and visibility decreases (is inversely proportional) as an amount of water floating in the air increases.

The subject area SA is an area defined as an area where the subject SP (or a part of the subject SP) exposed to the fog environment is to be disposed, and the fog environment forming apparatus 10 is operated so as to obtain a fog environment with desired visibility at least in this subject area SA. That is, when the subject area SA is set, it can be said that the subject area SA is an area in which whether a fog environment with desired visibility is obtained by operating the fog environment forming apparatus 10 is confirmed in advance. When an entire object to be tested is not included in the subject area SA, a portion included in the subject area SA may be recognized as the subject SP.

The subject area SA is only required to be recognized as having a height range including the subject SP. Therefore, the subject area SA is recognized as an area within a height range from a floor surface 2 to an upper end (or a position slightly higher than the upper end) of the subject SP. The subject area SA may be recognized as an area within a height range from the floor surface 2 to a position below a sprayer 12a described later.

Note that the subject area SA may be used only to represent the position at which the subject SP is disposed, and as long as the position at which the subject SP is to be disposed is obvious, the subject area SA is not required to be set.

The fog environment forming apparatus 10 is used in the structure 5 including the environment chamber 1 and a blower chamber 3. The structure 5 has a hollow shape, and a partition wall 6 is provided in an internal space of the structure 5. As a result, the internal space of the structure 5 is partitioned into the environment chamber 1 including the subject area SA and the blower chamber 3 located laterally to the environment chamber 1.

The fog environment forming apparatus 10 includes a spraying portion 12 configured to discharge atomized water (mist) and a blower 15 for flowing air containing atomized water.

The spraying portion 12 is connected to a fog generating portion 17 that generates atomized water (mist) from water stored in a container, and discharges the mist obtained by the fog generating portion 17 in the environment chamber 1. The spraying portion 12 may include one sprayer 12a or may include a plurality of sprayers 12a. Although three sprayers 12a are shown in Fig. 1, the number of sprayers 12a is arbitrary. In a case where the spraying portion 12 includes a plurality of sprayers 12a, the fog generating portion 17 may include a fog generator 17a provided corresponding to each sprayer 12a, or may include one fog generator 17a, and the mist obtained by the one fog generator 17a may be introduced into each sprayer 12a.

Each fog generator 17a is disposed behind a ceiling of the environment chamber 1. Each sprayer 12a is connected to the corresponding fog generator 17a through a pipe 20. The pipe 20 penetrates the ceiling of the environment chamber 1, and the sprayer 12a is provided at a distal end of the pipe 20.

The sprayer 12a (i.e. spraying portion 12) is disposed at a position higher than the subject SP in the environment chamber 1. As shown in Fig. 1, the plurality of sprayers 12a is disposed at the same height position. The configuration is not limited to the configuration in which the sprayers 12a are disposed at the same height position.

As described later, the structure 5 has a structure in which air circulates between the environment chamber 1 and the blower chamber 3. Therefore, the sprayer 12a (i.e. spraying portion 12) is disposed so as to discharge the mist at approximately the same height position as an inflow hole 6b described later provided in the partition wall 6. However, the height position is not limited to this height position.

The blower 15 is provided to mix air containing atomized water (mist). That is, since the mist discharged from the sprayer 12a (i.e. spraying portion 12) is fine water particles floating in the air, the mist does not spread in the environment chamber 1 quickly after being discharged from the sprayer 12a (i.e. spraying portion 12). Accordingly, there is a possibility that a density of a fog is also generated in the subject area SA. Therefore, the blower 15 is configured to suction the air containing the mist discharged from the sprayer 12a (i.e. spraying portion 12), mix the suctioned air, and cause the mixed air to flow out.

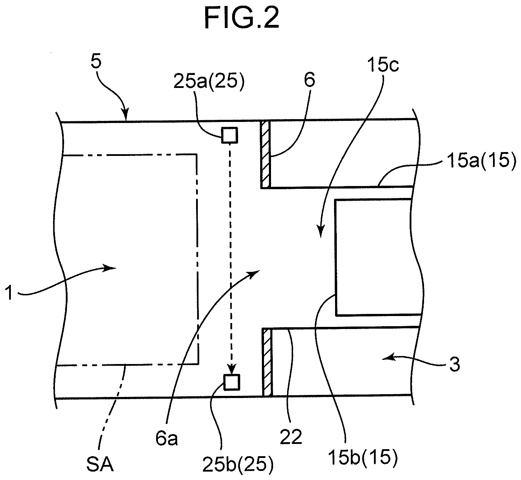

The blower 15 includes, for example, a sirocco fan. That is, the blower 15 includes a casing 15a and an impeller 15b (see Fig. 2) disposed in the casing 15a, and can mix the air containing the suctioned mist in the casing 15a. The casing 15a has a suction port (not shown) for suctioning air and a blow-out port 15c for blowing out the air mixed with the mist. Note that the blower 15 is only required to be configured to cause air to flow out in a predetermined direction, and thus may include, for example, an axial flow fan. In this case, a mixing effect can be further enhanced if the blower 15 includes the casing 15a that accommodates the impeller 15b. However, it is also possible to use the blower 15 without the casing 15a.

The air flowing out of the blower 15 moves by a distance in a predetermined range while maintaining a mixed state. The rotation speed of the blower 15 is suppressed so as not to increase an adhesion amount of the mist to the impeller 15b of the blower 15 and not to increase an evaporation amount of the mist due to heat generation of the blower 15. Therefore, since an amount of air blown from the blower 15 is suppressed to be low, the blower 15 is preferably disposed such that the blow-out port 15c is close to the subject area SA.

The blower 15 is disposed in the blower chamber 3, and an operation of the blower 15 generates an air circulation between the environment chamber 1 and the blower chamber 3. That is, the partition wall 6 is provided with two communication holes spaced apart in a vertical direction. The blow-out port 15c of the blower 15 faces the lower communication hole. The blow-out port 15c faces the subject area SA. The lower communication hole functions as an outflow hole 6a through which air flows out from the blower chamber 3 to the environment chamber 1. That is, the outflow hole 6a is located within the height range of the subject SP or the subject area SA.

The air flowing out of the blower 15 flows into the environment chamber 1 through the outflow hole 6a, and accordingly, the air in the environment chamber 1 flows into the blower chamber 3 through the upper communication hole. The upper communication hole functions as an inflow hole 6b through which air flows from the environment chamber 1 into the blower chamber 3. The air in the blower chamber 3 is suctioned into the casing 15a of the blower 15. Thus, an air circulation occurs between the environment chamber 1 and the blower chamber 3. The inflow hole 6b is not limited to one hole, and may include a plurality of holes. The same applies to the outflow hole 6a.

The blower 15 is disposed below the position of the inflow hole 6b in the blower chamber 3. As a result, in the blower chamber 3, the air containing the mist discharged from the sprayer 12a (i.e. spraying portion 12) flows downward and is suctioned into the blower 15. In other words, the spraying portion 12 is located above the blower 15.

The blow-out port 15c of the blower 15 may be directly connected to the outflow hole 6a, or may be connected to the outflow hole 6a via a duct 22. Fig. 1 shows a configuration in which the outflow hole 6a and the blow-out port 15c are disposed at the same height position, and the duct 22 extending in a blow-out direction is provided. That is, the blower 15 is disposed such that the blow-out port 15c is located within the height range of the subject SP or the subject area SA.

The blower 15 is installed in such an orientation as to blow out air horizontally from the blow-out port 15c, and the outflow hole 6a horizontally flows out the air flowing out from the blower 15 into the environment chamber 1 at a position above the floor surface 2. That is, the blow-out port 15c faces in a horizontal direction to be along the floor surface 2, and the blower 15 causes the air to flow in a direction along the floor surface 2 in the environment chamber 1. Therefore, the mist contained in the air sent out from the blower 15 hardly adheres to the floor surface 2. Since the outflow hole 6a is disposed within the height range of the subject SP, the air containing the mist flowing out of the blower 15 flows toward the subject SP. In other words, the blower 15 blows out air toward the subject SP in the subject area SA. However, a blowing speed of the air by the blower 15 is low so as not to disappear the mist.

The configuration of the blower 15 is not limited to the configuration in which air is blown out horizontally. For example, the blower 15 may be configured to cause the air to flow out from the blow-out port 15c in a direction inclined with respect to a horizontal as long as causing the air to flow toward the subject SP or the subject area SA within the height range of the subject SP or the subject area SA. That is, the blower 15 is only required to be disposed so as to cause air to flow in a lateral direction toward the subject SP or the subject area SA. Therefore, the blower 15 is not required to be installed so as to cause air to flow out in the horizontal direction.

The outflow hole 6a opens toward the subject area SA. The subject area SA is close to the partition wall 6. Therefore, the air flowing out from the outflow holes 6a can pass through the subject area SA while maintaining a mixed state with the mist. In other words, the subject area SA is set within a range where the air flowing out of the blower 15 reaches in a mixed state.

As shown in Fig. 1, the environment chamber 1 is provided with a visibility measurement sensor 25 having a detection region between the outflow hole 6a and the subject area SA. That is, the visibility measurement sensor 25 is disposed such that the detection region is close to the outflow hole 6a through which the mixed air flows out.

That is, since the movement of atomized water cannot be controlled near the spraying portion 12, if the detection region is set near the spraying portion 12, a value detected by the visibility measurement sensor 25 is likely to fluctuate. On the other hand, in a case where the detection region is set at a position on an outflow side of the blower 15, the air mixed in the blower 15 passes through the detection region in one direction, and accordingly, a moisture content in the air passing through the detection region varies little. Therefore, even if configured to electrically measure the density of fog, the visibility measurement sensor 25 can suppress a fluctuation of an output value and improve the reliability of a measured value.

As shown in Fig. 2, the visibility measurement sensor 25 includes a light projector 25a, a light receiver 25b, and a calculator (not shown), and the light projector 25a is disposed so as to emit light (for example, visible light, infrared rays, and the like) in a direction crossing the air from the blower 15. That is, the light projector 25a is disposed to emit light so as to pass in a direction orthogonal to an outflow direction of the air and in the horizontal direction at a position facing the outflow hole 6a.

The light receiver 25b is disposed so as to receive the light emitted from the light projector 25a. A passage region of the light emitted from the light projector 25a is the detection region of the visibility measurement sensor 25. The light receiver 25b is configured to output a signal corresponding to an amount of received light, and the calculator is configured to calculate and output visibility based on the signal from the light receiver 25b.

In the fog environment forming apparatus 10 according to the first embodiment, atomized water (mist) is generated in each fog generator 17a, and the mist is discharged from the corresponding sprayer 12a in the environment chamber 1. When the blower 15 operates, the air from the blower 15 flows into the environment chamber 1 through the outflow hole 6a, and accordingly, the air in the environment chamber 1 flows into the blower chamber 3 through the inflow hole 6b. Such an air circulation occurs between the environment chamber 1 and the blower chamber 3.

Along with this air circulation, the air containing the mist discharged from the sprayer 12a is mixed in the blower 15, and the mixed air flows from the blower 15 toward the subject SP in the subject area SA. Therefore, since the mist flows toward the subject SP in a mixed state in the air, unevenness of a thickness of a fog, that is, a density of the fog (increase and decrease in proportion of water particles) is less likely to be generated around the subject SP.

That is, the water sprayed to form the fog environment is atomized. Thus, even when water is discharged from the spraying portion 12 (or sprayer 12a), atomized water does not quickly spread in the air. Therefore, merely spraying atomized water in the environment chamber 1 could generate a portion where more water particles exist and a portion where less water particles exist in the air. However, by the fog environment forming apparatus 10, the air containing the mist is mixed in the blower 15, and the flow of the mixed air is given by the blower 15. Therefore, since the air containing the mist is likely to continuously flow toward the periphery of the subject SP, it is possible to make it difficult to generate the unevenness in density of the fog around the subject SP. Moreover, since the air containing the mist is mixed by the blower 15, even if fine particles of water having different particle sizes are contained, it is possible to suppress generation of the unevenness in density of the fog by stirring of fine particles having different particle sizes. Unlike an evaporator for air conditioning, the blower 15 does not cause condensation of moisture, and thus, disappearance of water particles is suppressed.

In the present embodiment, the blower 15 is disposed such that the blow-out port 15c is located within the height range of the subject SP, and the mixed air flows from the blow-out port 15c toward the subject SP within the height range of the subject SP. That is, since the mixed air can flow within the height range of the subject SP, it is possible to effectively suppress the generation of the unevenness in density of the fog within the height range of the subject SP.

In the present embodiment, air containing atomized water flows downward and is suctioned into the blower 15 by the air flow generated by the operation of the blower 15. It is therefore possible to form a predetermined fog environment at a place lower than the spraying portion 12 (or sprayer 12a) in a state where the spraying portion 12 (or sprayer 12a) is installed at a high position.

In the present embodiment, air circulates between the environment chamber 1 and the blower chamber 3, and outside air does not flow into the structure 5. Therefore, a fluctuation in humidity in the environment chamber 1 is suppressed. It is therefore possible to suppress a change in density of the fog due to a humidity change.

In the present embodiment, visibility of air reaching the subject SP can be measured by the visibility measurement sensor 25. It is therefore easier to confirm whether predetermined visibility is obtained around the subject SP.

Moreover, the light projector 25a of the visibility measurement sensor 25 is disposed so as to emit light in a direction crossing the air from the blower 15. Thus, the air (air mixed with the mist) flowing out of the blower 15 passes through the detection region while flowing in a direction crossing a light emission direction. Then, visibility according to the moisture content in the air mixed with the mist can be easily output by the visibility measurement sensor 25. It is therefore easier to determine whether a fog environment having predetermined visibility is obtained around the subject SP.

Since the blower chamber 3 is not provided with an evaporator (which cools the air by using a cooling medium) for cooling the air, a case does not occur where the mist disappears in the evaporator.

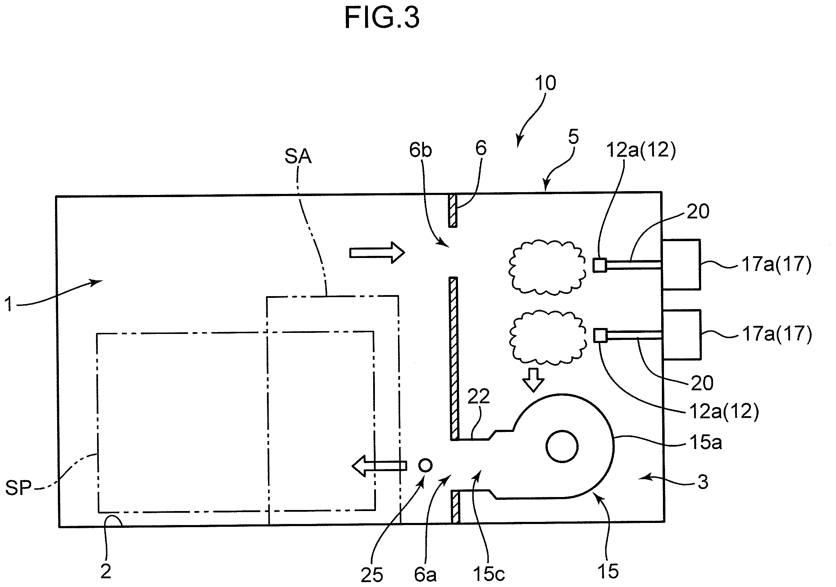

In the present embodiment, each sprayer 12a (i.e. spraying portion 12) is disposed in the environment chamber 1, but the present embodiment is not limited to this arrangement. For example, as shown in Fig. 3, each sprayer 12a (i.e. spraying portion 12) may be disposed in the blower chamber 3. In this case, each sprayer 12a (i.e. spraying portion 12) may be disposed at a position higher than the blower 15. In that case, the air containing the mist discharged from the sprayer 12a flows downward and is suctioned into the blower 15. Although the sprayer 12a (i.e. spraying portion 12) is installed on a side wall of the blower chamber 3 in Fig. 3, the sprayer 12a (i.e. spraying portion 12) may be installed on a ceiling of the blower chamber 3.

In a configuration shown in Fig. 1, the subject area SA may be recognized as an area within the height range from the floor surface 2 of the environment chamber 1 to a position below the sprayer 12a. In a configuration in Fig. 3, the subject area SA may also be recognized as an area within the height range from the floor surface 2 of the environment chamber 1 to a position below the sprayer 12a. In the configuration in Fig. 3, the subject area SA may be recognized as an area within a height range from the floor surface 2 of the environment chamber 1 to the position above the sprayer 12a and a position below the ceiling. In the case of the configuration in Fig. 3 in which each sprayer 12a (i.e. spraying portion 12) is disposed in the blower chamber 3, the subject area SA may be recognized as an area within a height range from the floor surface 2 of the environment chamber 1 to the ceiling of the environment chamber 1. In this case, since the air containing atomized water mixed by the blower 15 also flows into the environment chamber 1, an unevenness in density of the fog is less likely to be generated in the subject area SA.

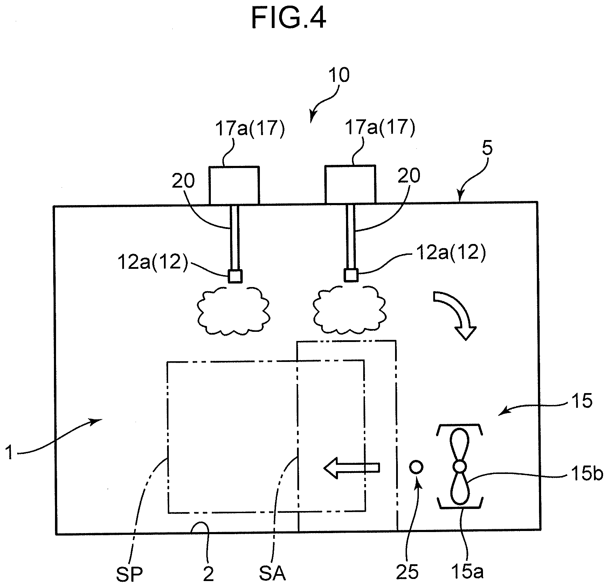

In the above embodiment, the inside of the structure 5 is partitioned into the environment chamber 1 and the blower chamber 3, but the present embodiment is not limited to this configuration. For example, as shown in Fig. 4, the fog environment forming apparatus 10 may be applied to the structure 5 in which the partition wall 6 is not provided and the internal space is configured as one space. In this case, the internal space of the structure 5 functions as the environment chamber 1, and the subject area SA is set and each sprayer 12a (or spraying portion 12) and the blower 15 are disposed in the environment chamber 1. Although Fig. 4 shows a case where the blower 15 includes an axial flow fan, the present embodiment is not limited to this configuration, and the blower 15 may include another type of fan. The blower 15 is not limited to a configuration including the casing 15a that accommodates the impeller 15b.

In a form in Fig. 4, the blower 15 is preferably disposed in a height range of the subject SP so as to cause air to flow out in the horizontal direction or a direction slightly inclined with respect to the horizontal direction toward the subject SP.

### (Second embodiment)

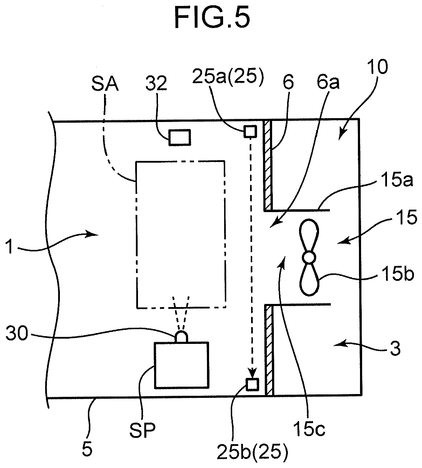

In the first embodiment, on the premise that at least a part of the subject SP is disposed in the subject area SA, the air from the blower 15 flows toward the subject SP located in the subject area SA. On the other hand, in a second embodiment, as shown in Fig. 5, the subject SP is disposed outside the subject area SA. Therefore, in the second embodiment, the blower 15 is disposed so as to cause the mixed air to flow out in a different direction from the direction toward the subject SP. Here, the same components as the components of the first embodiment are denoted by the same reference signs, and a detailed description thereof will be omitted.

In the second embodiment, the subject SP includes, for example, a millimeter wave radar 30, and the subject SP is disposed so as to emit a radio wave from the millimeter wave radar 30 located outside the subject area SA toward the subject area SA. The radio wave emitted from the millimeter wave radar 30 is reflected by a target object 32(for example, a pillar, a person, or the like) disposed on an opposite side of the subject SP across the subject area SA, and detected by the millimeter wave radar 30.

The blow-out port 15c of the blower 15 and the outflow hole 6a face the subject area SA, but face a direction different from the direction toward the subject SP. In this case, the fog environment forming apparatus 10 is also operated so as to obtain a fog environment with desired visibility in the subject area SA.

In the visibility measurement sensor 25, as in the first embodiment, the light projector 25a is disposed to emit light such that the light passes in the horizontal direction at a position facing the outflow hole 6a. That is, the light projector 25a is disposed so as to emit light in a direction crossing the air from the blower 15.

Although descriptions of other configurations, operations, and effects are omitted, the description of the first embodiment can be applied to the description of the second embodiment.

### (Other embodiments)

It should be understood that the embodiments disclosed herein are illustrative in all respects and are not restrictive. The present invention is not limited to the above embodiments, and various changes, improvements, and the like can be made without departing from the gist of the present invention. For example, the visibility measurement sensor 25 can be omitted.

In the above embodiment, the sprayer 12a (i.e. spraying portion 12) is disposed above the blower 15, but the present embodiment is not limited to this arrangement. For example, the sprayer 12a (i.e. spraying portion 12) may be disposed at the same height position as the blower 15, and air may circulate in a horizontal plane.

The inflow hole 6b is located above the outflow hole 6a, but the present embodiment is not limited to this position. For example, the inflow hole 6b may be disposed at a position shifted laterally to the outflow hole 6a. In this case, the air does not circulate in the vertical direction but circulates in the horizontal direction. Therefore, the sprayer 12a (i.e. spraying portion 12) is disposed laterally to the blower 15.

Here, the above embodiments will be outlined.
(1) The fog environment forming apparatus according to the above embodiments includes a spraying portion configured to discharge atomized water for forming a fog environment, and a blower disposed to suction air containing the atomized water discharged from the spraying portion and cause the air containing the water suctioned to flow out toward a subject or a subject area while mixing the air.

In the fog environment forming apparatus according to the embodiments, the air containing atomized water (mist) discharged from the spraying portion is mixed in the blower, and the mixed air (containing atomized water) flows toward the subject or the subject area. Therefore, since the atomized water flows toward the subject or the subject area after being mixed in the air, unevenness of the thickness of the fog, that is, the unevenness in density of the fog (increase and decrease in proportion of water particles) is less likely to be generated around the subject or in the subject area. That is, since the water sprayed to form the fog environment is atomized, the atomized water does not quickly spread in the air even though the water is discharged from the spraying portion. Therefore, merely spraying atomized water could generate a portion where more water particles exist and a portion where less water particles exist in the air. However, in the fog environment forming apparatus, air containing atomized water is mixed by the blower, and the mixed air flows toward the subject or the subject area by the blower. It is therefore possible to make it difficult to generate the unevenness in density of the fog around the subject or in the subject area.

(2) The blower may be configured to cause the air mixed by the blower to flow out toward the subject or the subject area within a height range of the subject or the subject area.

In this aspect, the air mixed by the blower and flowing out within the height range of the subject or the subject area flows toward the subject or the subject area and reaches the subject or the subject area. Therefore, since the mixed air can flow within the height range, it is possible to suppress generation of the unevenness in density of the fog within the height range.

(3) The spraying portion may be located above the blower. In this case, the blower may be disposed to suction the air containing the atomized water discharged from the spraying portion and flowing downward.

In this aspect, the air containing the atomized water flows downward by the operation of the blower and is suctioned into the blower. Therefore, by installing the spraying portion at a high position, a predetermined fog environment can be formed at a place lower than the spraying portion.

(4) The fog environment forming apparatus may be applied to a structure provided with a partition wall that partitions an internal space of the structure into a blower chamber in which the blower is disposed and an environment chamber in which the subject or the subject area is disposed. In this case, the partition wall may be provided with an inflow hole and an outflow hole, the inflow hole causing air to flow from the environment chamber into the blower chamber by operation of the blower, and the outflow hole being located below the inflow hole and causing air to flow out from the blower chamber into the environment chamber.

In this aspect, the air circulates between the environment chamber and the blower chamber by the operation of the blower. At this time, the air mixed by the blower can flow toward the subject or the subject area through the outflow hole of the partition wall. Since the outflow hole is disposed at a position lower than the inflow hole, a configuration can be easily adopted in which air flows from within the height range of the subject or the subject area toward the subject or the subject area. Since air circulates between the environment chamber and the blower chamber, it is possible to suppress a change in density of fog in the environment chamber due to an influence of outside air.

(5) The fog environment forming apparatus may further include the visibility measurement sensor having a detection region between the blower and the subject or the subject area. In this aspect, the visibility of air reaching the subject or the subject area can be measured by the visibility measurement sensor. It is therefore easier to confirm whether predetermined visibility is obtained around the subject or in the subject area.

(6) The visibility measurement sensor may include the light projector disposed to emit light in a direction crossing the air from the blower, and the light receiver disposed to receive the light emitted from the light projector. In this case, the light passage region functions as the detection region.

In this aspect, the air (air mixed with the atomized water) flowing out of the blower flows in a direction crossing the light emission direction and passes through the detection region. Since the air is mixed in the blower, the moisture content in air has less variation in the air flowing out of the blower than near the spraying portion. That is, since the movement of atomized water is hard to be controlled near the spraying portion, if the detection region is set near the spraying portion, the value detected by the visibility measurement sensor is likely to fluctuate. On the other hand, by setting the detection region on the outflow side of the blower, it is possible to suppress a fluctuation in the detection value of the visibility measurement sensor. Then, visibility according to the moisture content in the air mixed with the atomized water can be easily output by the visibility measurement sensor. It is therefore easier to determine whether a fog environment having predetermined visibility is obtained around the subject or in the subject area.

(7) The blower may include a casing having the blow-out port, and an impeller disposed in the casing. **In** this case, the blow-out port of the casing may be located within the height range of the subject or the subject area and face the subject area.

(8) The blow-out port of the casing may face in the horizontal direction to be along the floor surface.

(9) The fog environment forming apparatus may be applied to a structure provided with the partition wall that partitions the internal space in the structure into the blower chamber in which the blower is disposed and the environment chamber in which the subject or the subject area is disposed. In this case, the partition wall may be provided with the inflow hole and the outflow hole, the inflow hole causing air to flow from the environment chamber into the blower chamber by operation of the blower, and the outflow hole causing air to flow out from the blower chamber into the environment chamber. The outflow hole may be located within the height range of the subject or the subject area and cause air from the blower to flow out toward the subject or the subject area.

In this aspect, the air circulates between the environment chamber and the blower chamber by the operation of the blower. At this time, the air mixed by the blower flows toward the subject or the subject area through the outflow holes located within the height range of the subject or the subject area. Therefore, since the air mixed with the mist can flow toward the subject or the subject area, it is possible to suppress generation of the unevenness in density of the fog within the height range. Since air circulates between the environment chamber and the blower chamber, it is possible to suppress a change in density of fog in the environment chamber due to an influence of outside air.

(10) A fog environment forming method according to the above embodiments includes discharging, by a spraying portion, atomized water for forming a fog environment, suctioning, by a blower, air containing the atomized water discharged from the spraying portion, and causing, by the blower, the air containing the water suctioned to flow out toward a subject or a subject area while mixing the air.

In the fog environment forming method, the air containing atomized water discharged from the spraying portion is mixed in the blower, and the mixed air (containing atomized water) flows toward the subject or the subject area. Therefore, since the atomized water flows toward the subject or the subject area after being mixed in the air, unevenness of the thickness of the fog, that is, the unevenness in density of the fog (increase and decrease in proportion of water particles) is less likely to be generated around the subject or in the subject area. That is, since the water sprayed to form the fog environment is atomized, the atomized water does not quickly spread in the air even though the water is discharged from the spraying portion. Therefore, merely spraying atomized water could generate a portion where more water particles exist and a portion where less water particles exist in the air. However, in the fog environment forming method, air containing atomized water is mixed by the blower, and the mixed air flows toward the subject or the subject area by the blower. It is therefore possible to make it difficult to generate the unevenness in density of the mist around the subject or in the subject area.

As described above, it is possible to suppress occurrence of unevenness in density of a fog around the subject exposed to a predetermined fog environment or in the subject area.

This application is based on Japanese Patent application No. 2024-51045 filed in Japan Patent Office on March 27, 2024, the contents of which are hereby incorporated by reference.

## Claims

1. A fog environment forming apparatus (10) comprising:
a spraying portion (12) configured to discharge atomized water for forming a fog environment; and
a blower (15) disposed to suction air containing the atomized water discharged from the spraying portion (12) and cause the air containing the water suctioned to flow out toward a subject (SP) or a subject area (SA) while mixing the air.

2. The fog environment forming apparatus (10) according to claim 1, wherein the blower (15) is configured to cause the air mixed by the blower (15) to flow out toward the subject (SP) or the subject area (SA) within a height range of the subject (SP) or the subject area (SA).

3. The fog environment forming apparatus (10) according to claim 1 or 2, wherein
the spraying portion (12) is located above the blower (15), and
the blower (15) is disposed to suction the air containing the atomized water discharged from the spraying portion (12) and flowing downward.

4. The fog environment forming apparatus (10) according to any one of claims 1 to 3, wherein
the fog environment forming apparatus (10) is applied to a structure (5) provided with a partition wall (6) that partitions an internal space of the structure (5) into a blower chamber (3) in which the blower (15) is disposed and an environment chamber (1) in which the subject (SP) or the subject area (SA) is disposed, and
the partition wall (6) is provided with an inflow hole (6b) and an outflow hole (6a), the inflow hole (6b) causing air to flow from the environment chamber (1) into the blower chamber (3) by operation of the blower (15), and the outflow hole (6a) being located below the inflow hole (6b) and causing the air to flow out from the blower chamber (3) into the environment chamber (1).

5. The fog environment forming apparatus (10) according to any one of claims 1 to 4, further comprising a visibility measurement sensor (25) having a detection region between the blower (15) and the subject (SP) or the subject area (SA).

6. The fog environment forming apparatus (10) according to claim 5, wherein the visibility measurement sensor (25) includes a light projector (25a) disposed to emit light in a direction crossing the air from the blower (15), and a light receiver (25b) disposed to receive the light emitted from the light projector (25a), and a passage region of the light functions as the detection region.

7. The fog environment forming apparatus (10) according to any one of claims 1 to 6, wherein
the blower (15) includes a casing (15a) having a blow-out port (15c) and an impeller (15b) disposed in the casing (15a), and
the blow-out port (15c) of the casing (15a) is located within the height range of the subject (SP) or the subject area (SA) and faces the subject area (SA).

8. The fog environment forming apparatus (10) according to claim 7, wherein the blow-out port (15c) of the casing (15a) faces in a horizontal direction to be along a floor surface (2).

9. The fog environment forming apparatus (10) according to any one of claims 1 to 3, wherein
the fog environment forming apparatus (10) is applied to a structure (5) provided with a partition wall (6) that partitions an internal space of the structure (5) into a blower chamber (3) in which the blower (15) is disposed and an environment chamber (1) in which the subject (SP) or the subject area (SA) is disposed,
the partition wall (6) is provided with an inflow hole (6b) and an outflow hole (6a), the inflow hole (6b) causing air to flow from the environment chamber (1) into the blower chamber (3) by operation of the blower (15), and the outflow hole (6a) causing the air to flow out from the blower chamber (3) into the environment chamber (1), and
the outflow hole (6a) is located within the height range of the subject (SP) or the subject area (SA), and causes the air from the blower (15) to flow out toward the subject (SP) or the subject area (SA).

10. A fog environment forming method comprising:
discharging, by a spraying portion (12), atomized water for forming a fog environment;
suctioning, by a blower (15), air containing the atomized water discharged from the spraying portion (12); and
causing, by the blower (15), the air containing the water suctioned to flow out toward a subject (SP) or a subject area (SA) while mixing the air.
